# FASCICULE DE BREVET EUROPEEN

(11) **EP 1 554 656 B1**
(45) Date de publication et mention de la délivrance du brevet: **14.06.2006**
(21) Numéro de dépôt: 02785547.7
(22) Date de dépôt: 15.10.2002
(51) Int. Cl.: G06F 13/42, G01R 31/3185

(54) **PROTOCOLE DE TRANSMISSION DE MESSAGES NUMERIQUES**
PROTOKOLL ZUR ÜBERTRAGUNG VON DIGITALEN NACHRICHTEN
DIGITAL MESSAGE TRANSMISSION PROTOCOL

(43) Date de publication de la demande: 20.07.2005
(73) Titulaire: STMicroelectronics S.A., 92120 Montrouge (FR)
(72) Inventeur: REGNIER, Laurent, Les Arènes, F-38610 Gieres (FR)
(74) Mandataire: de Beaumont, Michel
(86) Numéro de dépôt international: PCT/FR2002/003521
(87) Numéro de publication internationale: WO 2004/036442

(56) Documents cités:
- O'KEEFFE H ET AL: "EINHEITLICHE DEBUG-SCHNITTSTELLE DER ZUKUNFT DER NEXUS-STANDARD SOLL DIE KOMMUNIKATION ZWISCHEN EMULATOR UND PROZESSOR VEREINHEITLICHEN" ELEKTRONIK, FRANZIS VERLAG GMBH. MUNCHEN, DE, vol. 49, no. 18, 5 septembre 2000 (2000-09-05), pages 124-128, XP001107530 ISSN: 0013-5658
- MACNAMEE C: "EIN INTERFACE FUER ALLE NEXUS ALS GLOBALER DEBUG-STANDARD" ELEKTRONIKPRAXIS, VOGEL, WUERZBURG, DE, no. 3, 8 février 2000 (2000-02-08), pages 104-106,108, XP008001346 ISSN: 0341-5589
- SCHMITT W: "NEXUS - DEBUG-KONZEPT DER ZUKUNFT? UNIVERSELLE EMULATIONS- UND KALIBRIERSCHNITTSTELLE FUER MIKROCONTROLLER" ELEKTRONIK, FRANZIS VERLAG GMBH. MUNCHEN, DE, vol. 48, no. 17, 24 août 1999 (1999-08-24), pages 52-59, XP000931028 ISSN: 0013-5658
- ANONYMOUS: "The Nexus 5001 Forum; Standard for a Global Embedded Processor Debug Interface" [en ligne] 15 décembre 1999 (1999-12-15) , IEEE-ISTO , USA XP002248380 Extrait de l'Internet: <URL: http://www.nexus5001.org/standard/ieee_ist o_5001_1999.pdf> [extrait le 2003-07-18] cité dans la demande le document en entier

## Description

La présente invention concerne le test de microprocesseurs. Elle concerne plus particulièrement un procédé et un dispositif de transmission de données numériques entre un circuit de surveillance intégré dans une puce de microprocesseur et un outil d'analyse.

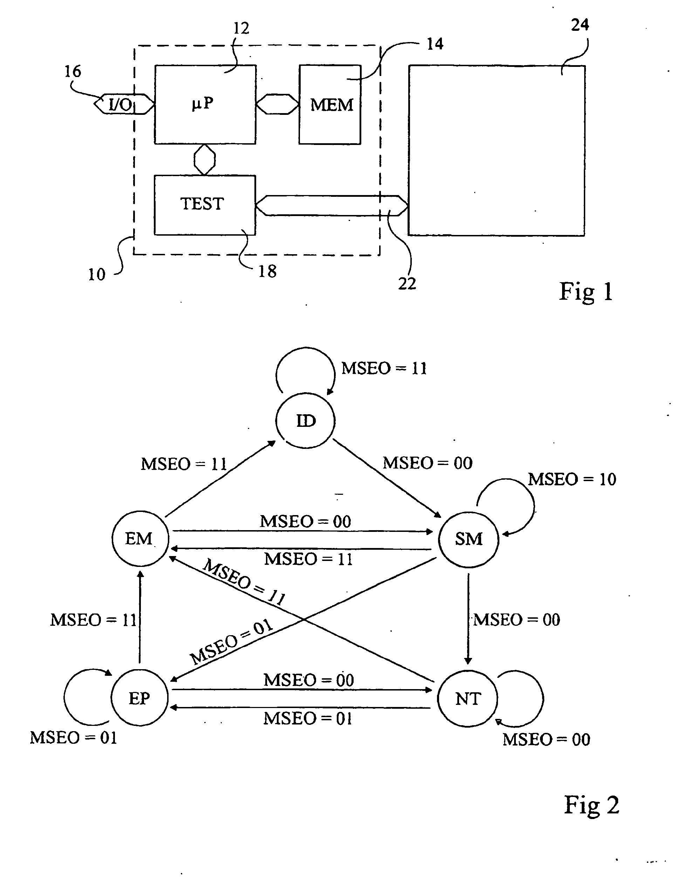

La figure 1 représente de façon schématique un circuit intégré 10 comportant un microprocesseur (*µ*P) 12, une mémoire interne (MEM) 14 et des bornes d'entrée/sortie (I/O) 16. Le microprocesseur 12 est destiné à exécuter un programme ou logiciel stocké dans la mémoire 14. Sous la commande du programme, le microprocesseur 12 peut traiter des données fournies par les bornes d'entrée/sortie 16 ou stockées dans la mémoire 14 et lire ou écrire des données par les bornes d'entrée/sortie 16.

De façon à vérifier le bon fonctionnement du microprocesseur, on intègre généralement au circuit intégré 10 un circuit de surveillance 18 (TEST). Le circuit de surveillance 18 est adapté à lire des données spécifiques fournies par le microprocesseur 12 lors du déroulement d'un programme, et à réaliser éventuellement un traitement sur les données lues. Des bornes de test 22 relient le circuit de surveillance 18 à un outil d'analyse 24. L'outil d'analyse 24 peut effectuer un traitement des signaux reçus, par exemple en fonction de commandes fournies par un utilisateur, et assurer une analyse détaillée du fonctionnement du microprocesseur 12. En particulier, l'outil d'analyse 24 peut déterminer la séquence d'instructions du programme réellement exécutée par le microprocesseur 12.

Le nombre de bornes de test 22 peut être du même ordre de grandeur que le nombre de bornes d'entrée/sortie 16, par exemple 200 à 400 bornes. Les bornes de test 22 ainsi que les connexions du circuit de surveillance 18 occupent une surface de silicium importante, ce qui entraîne un accroissement indésirable du coût du circuit. Pour cela, une première version du circuit intégré 10 incluant le circuit de surveillance 18 et les bornes de test 22 est produite en petites quantités pour effectuer la mise au point du programme du microprocesseur 12 ou "programme utilisateur". Après cette mise au point, une version du circuit intégré 10 débarrassée du circuit de surveillance 18 et des bornes de test 22 est commercialisée. Cela implique la réalisation de deux versions du circuit intégré, ce qui demande un travail important et est relativement coûteux. De plus, la puce finale n'est pas forcément identique à la puce testée.

Pour pallier les inconvénients précédemment mentionnés, on cherche à réaliser un circuit de surveillance 18 qui occupe une surface réduite et nécessite seulement un nombre réduit de bornes de test 22, ce qui diminue le coût de revient du circuit de surveillance. Le circuit de surveillance 18 peut alors être laissé sur le circuit intégré 10 finalement commercialisé.

On cherche donc à diminuer le nombre de signaux fournis par le circuit de surveillance 18. Pour ce faire, on fait réaliser directement au niveau du circuit de surveillance 18 certaines opérations logiques sur les données mesurées au niveau du microprocesseur 12 de façon à transmettre seulement des messages ayant un contenu informationnel important.

Ainsi, la norme IEEE-ISTO-5001 en préparation propose dans sa version de 1999, accessible par exemple sur le site www.ieee-isto.org/Nexus5001, un protocole particulier d'échanges de messages entre un circuit de surveillance et un outil d'analyse pour un circuit de surveillance 18 ne nécessitant qu'un nombre réduit de bornes de test 22.

Le circuit de surveillance est prévu pour surveiller le fonctionnement du microprocesseur et pour fournir aux bornes de test des messages prédéterminés seulement lorsque certaines instructions prédéterminées sont exécutées. Les messages peuvent indiquer combien d'instructions ont été exécutées depuis le message précédent. Des messages peuvent également être prévus pour indiquer que certains points prédéterminés du programme sont atteints. L'outil d'analyse est prévu pour reconstituer le fonctionnement du microprocesseur, c'est-à-dire le déroulement du programme dans le microprocesseur, à partir des messages reçus et du code du programme. La liste des types de messages et leur structure sont décrites dans la section 6 de la norme IEEE-ISTO-5001. Chaque message est divisé en paquets de taille variable et comporte au moins un paquet. Dans chaque paquet, les bits sont classés de gauche à droite par poids croissant. La norme IEEE-ISTO-5001 prévoit qu'un message peut comporter des paquets de taille fixée par la norme ou variable (fixée par l'utilisateur). Pour des raisons de simplicité, on considère par la suite qu'un paquet de taille variable peut comprendre un ou plusieurs paquets non représentés de taille fixée.

Pour limiter le nombre des bornes de test, chaque paquet est divisé en segments de n bits, où n est par exemple compris entre 4 et 16, transmis par un bus MDO de n bits. Les n bits de poids le plus faible du premier paquet de données du message sont recopiés bit à bit dans un premier segment, puis les n bits de poids le plus faible restants du paquet de données sont recopiés bit à bit dans un deuxième segment, et ainsi de suite jusqu'à ce que chaque bit du paquet ait été recopié. Les bits de poids le plus fort non utilisés du dernier segment ainsi formé reçoivent une valeur prédéterminée, par exemple 0. Chaque paquet de données est divisé en segments de la manière précédente. Les segments sont transmis à la suite par le bus MDO, en cadence avec un signal d'horloge non représenté propre au circuit de surveillance. Pour permettre la reconstruction des paquets de données à partir des segments, il est prévu de transmettre avec chaque segment sur des bornes de test supplémentaires un code MSEO qui permet à l'outil d'analyse d'identifier la nature des données contenues dans le segment. La norme IEEE-ISTO-5001 prévoit des codes MSEO pour identifier qu'un segment contient : un début de message (segment SM), des données intermédiaires (segment NT), une fin de paquet (segment EP) , une fin de message (segment EM) , ou que ce segment est un segment vide (segment ID) correspondant à une période d'inactivité entre deux messages.

Plutôt que d'identifier directement chaque segment par un code particulier, ce qui nécessiterait au moins trois bits, la norme IEEE-ISTO-5001 prévoit de donner au code MSEO une valeur qui, si l'on connaît le type du segment précédent, permet de déterminer le type du segment transmis. Le code MSEO identifie la transition entre le segment précédent et le segment transmis.

La figure 2 illustre schématiquement toutes les successions possibles de segments prévues par la norme IEEE-ISTO-5001. Les cercles portant les références SM, NT, EP, EM et ID représentent chacun un type de segment transmis. Les flèches joignant deux cercles indiquent que les deux segments correspondants peuvent être transmis l'un après l'autre. Une flèche partant d'un cercle pour y revenir indique qu'un segment de ce type peut être transmis plusieurs fois à la suite. Par exemple, un segment SM peut suivre un segment SM. Cela indique que le message envoyé était très court et comprenait un seul paquet de longueur inférieure ou égale à un segment. En d'autres termes, le premier segment SM contenait à la fois le début et la fin d'un message. Un segment SM peut être transmis après un segment SM, EM ou ID, et un segment ID peut être transmis après un segment EM ou ID. De même, un segment NT ou EM peut être transmis après un segment SM, NT ou EP. Enfin, un segment EP peut être transmis après un segment SM, NT ou EP.

La figure 2 illustre également la valeur prise par le code MSEO en fonction du type du segment transmis et du type du segment précédent. La valeur du code MSEO associée à chaque segment transmis est la valeur associée à la flèche allant du segment précédent au segment transmis. Un segment SM est identifié par une valeur 00 du code MSEO si le segment précédent était un segment EM ou ID, et il est identifié par une valeur 10 si le segment précédent était un segment SM. Un segment NT est identifié par une valeur 00 du code MSEO quel que soit le segment précédent. Un segment EP est identifié par une valeur 01 du code MSEO quel que soit le segment précédent. Un segment de type EM ou ID est identifié par une valeur 11 du code MSEO quel que soit le segment précédent.

A la réception des segments, l'outil d'analyse reconstitue les paquets de chaque message en mettant bout à bout les segments contenant des données d'un même paquet.

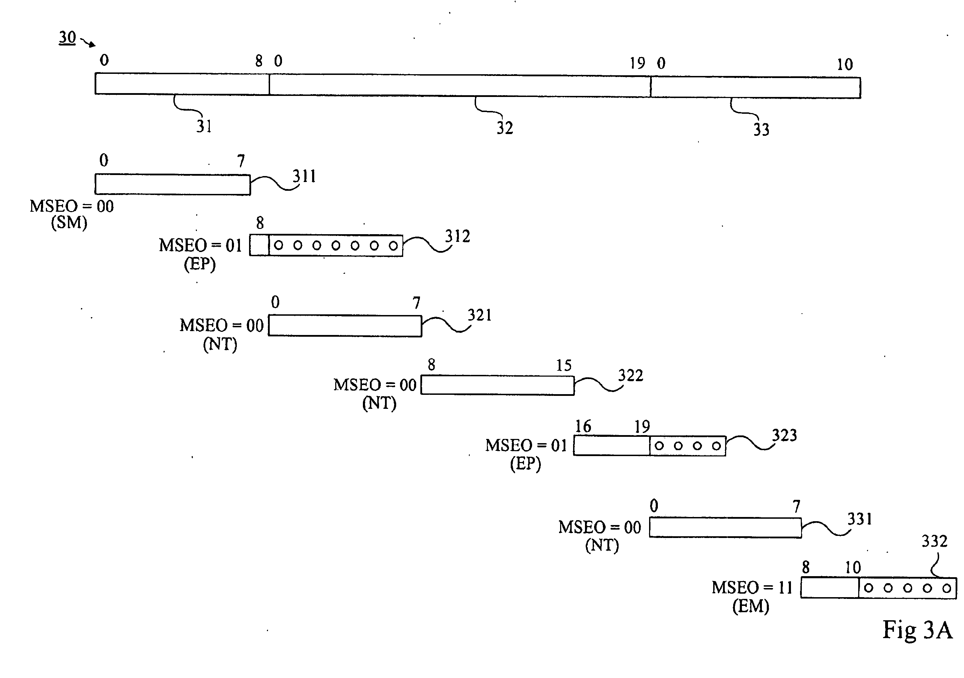

La figure 3A illustre à titre d'exemple la transmission d'un message 30 comportant trois paquets 31, 32 et 33 ayant respectivement 9, 20 et 11 bits. La figure 3A illustre également le code MSEO qui est transmis avec chaque segment du message 30. Pour transmettre le message 30 par un bus MDO de n = 8 bits, le premier paquet 31 est divisé en un premier segment 311 de début de message (MSEO = 00 si l'on suppose que le segment précédent était un segment ID) contenant les 8 bits de poids le plus faible du paquet 31 et un deuxième segment 312 de fin de paquet (MSEO = 01) contenant le bit de poids le plus fort du paquet 31, suivi de 7 zéros. De même, le paquet 32 est divisé en trois segments 321 (de type NT, MSEO = 00), 322 (de type NT, MSEO = 00), et 323 (de type EP, MSBO = 01) contenant respectivement les 8 bits de poids le plus faible, les 8 bits de poids le plus faible suivants et les 4 bits de poids le plus fort du paquet 32, suivis de 4 zéros. Le paquet 33 est divisé en deux segments, 331 (de type NT, MSEO = 00) et 332 (de type EM, MSEO = 11) contenant respectivement les 8 bits de poids le plus faible, et les 3 bits de poids le plus fort du paquet 33 suivis de 5 zéros.

Un objet de la présente invention est d'optimiser le procédé de transmission de messages décrit précédemment de façon à réduire le nombre de segments transmis dans divers cas particuliers.

Un autre objet de l'invention est de prévoir un dispositif permettant de mettre en oeuvre un tel procédé.

Pour atteindre ces objets, la présente invention prévoit un procédé de transmission, entre un circuit de surveillance intégré à un microprocesseur et un outil d'analyse, de messages numériques comprenant chacun au moins un paquet de données, comportant les étapes suivantes :
a/ diviser chaque paquet de données en segments successifs de même taille prédéterminée, chaque segment étant classé selon l'un ou l'autre des cinq types de segment suivants :
   - segment contenant un début de message ;
   - segment contenant des données intermédiaires ;
   - segment contenant une fin de paquet ;
   - segment contenant une fin de message ; ou
   - segment vide ;
b/ envoyer en même temps que chaque segment un signal d'identification caractérisant la différence de type entre le segment considéré et le segment précédent ; et
c/ reconstituer les paquets de chaque message en mettant bout à bout les segments contenant des données d'un même paquet ;
   dans lequel un segment contenant à la fois le début et la fin d'un message est classé comme étant un segment contenant une fin de message, et un segment contenant à la fois le début d'un message et la fin d'un premier paquet du message est classé comme étant un segment contenant une fin de paquet.

Selon un mode de réalisation de l'invention, un segment contenant un début de message ou un segment vide peut être transmis après un segment contenant une fin de message ou un segment vide ;
un segment contenant des données intermédiaires peut être transmis après un segment contenant un début de message ou des données intermédiaires ou une fin de paquet ; et
un segment contenant une fin de paquet ou une fin de message peut être transmis après un segment de type quelconque.

Selon un mode de réalisation de l'invention, le signal d'identification a :
une première valeur si le segment transmis contient un début de message ou des données intermédiaires ;
une deuxième valeur si le segment transmis contient une fin de paquet ;
une troisième valeur si le segment transmis contient une fin de message et si le segment précédent contenait une fin de message ou était un segment vide ; et
une quatrième valeur si le segment transmis est vide, ou si le segment transmis contient une fin de message et si le segment précédent contenait un début de message, des données intermédiaires ou une fin de paquet.

La présente invention vise également un dispositif de transmission, entre un circuit de surveillance intégré à un microprocesseur et un outil d'analyse, de messages numériques dont chacun comprend au moins un paquet de données, comportant :
un moyen pour diviser chaque paquet de données en segments successifs de même taille prédéterminée, chaque segment étant classé selon l'un ou l'autre des cinq types de segment suivants :
   - segment contenant un début de message ;
   - segment contenant des données intermédiaires ;
   - segment contenant une fin de paquet ;
   - segment contenant une fin de message ; ou
   - segment vide ;
un moyen pour envoyer en même temps que chaque segment un signal d'identification caractérisant la différence de type entre le segment considéré et le segment précédent ; et
un moyen pour reconstituer les paquets de chaque message en mettant bout à bout les segments contenant des données d'un même paquet ;
dans lequel le moyen pour diviser chaque paquet de données classe un segment contenant à la fois le début et la fin d'un message comme étant un segment contenant une fin de message, et classe un segment contenant à la fois le début d'un message et la fin d'un premier paquet du message comme étant un segment contenant une fin de paquet.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente de manière schématique un circuit intégré muni d'un dispositif de surveillance ;
la figure 2, précédemment décrite, illustre un protocole de transmission de messages tel que défini dans la version de 1999 de la norme IEEE-ISTO-5001 ;
les figures 3A et 3B illustrent un exemple de transmission d'un message selon le protocole de la figure 2 pour deux tailles de bus MDO différentes ;
la figure 4 illustre un protocole de transmission de messages selon la présente invention ; et
la figure 5 illustre la transmission du message de la figure 3B selon le protocole de la figure 4.

L'inventeur a analysé le fonctionnement du système de transmission de messages décrit précédemment dans le cas où le bus MDO a une largeur de données n égale ou supérieure à la taille du premier, et éventuellement unique, paquet de données de chaque message.

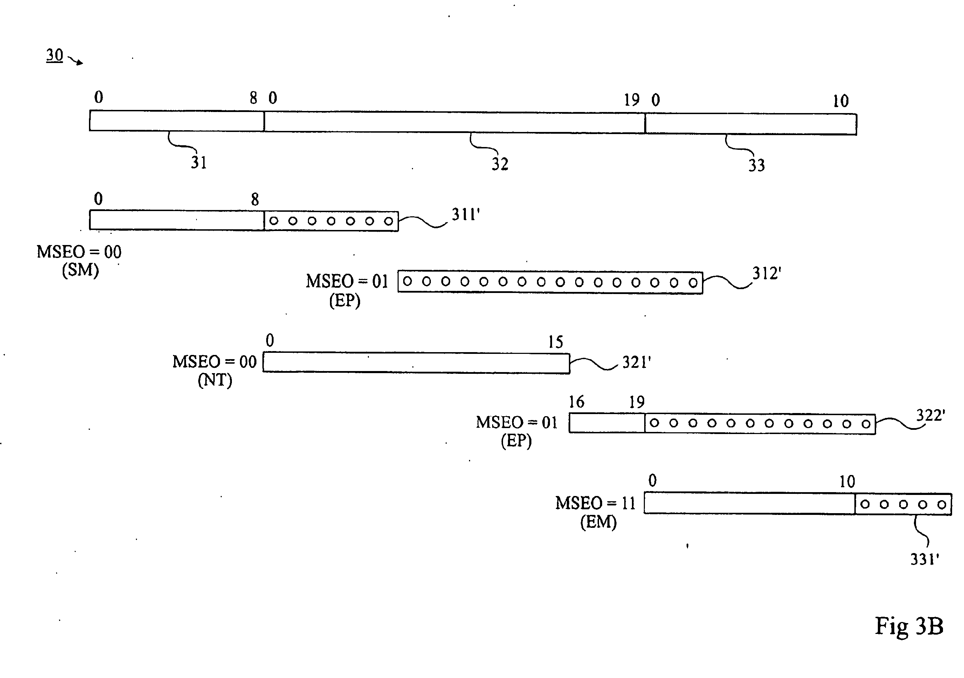

La figure 3B illustre la transmission du message 30 de la figure 3A et les segments utilisés pour transmettre un tel message par un bus MDO de n = 16 bits. Un seul segment 311' contient les 9 bits du premier paquet 31 suivis de 7 zéros, et ce segment est associé à un code de début de message (MSEO = 00) . Comme le protocole ne prévoit pas la possibilité d'indiquer que la fin du premier paquet a été envoyée dans ce même segment, il faut transmettre un segment suivant 312' de fin de paquet associé à un code MSEO = 01, qui ne contient que des zéros, avant de pouvoir transmettre des segments du paquet suivant. Le paquet suivant, 32, est alors divisé en un segment 321' de type NT (MSEO = 00) et un segment 322' de type EP (MSEO = 01) contenant respectivement les 16 bits de poids le plus faible, et les 4 bits de poids le plus fort du paquet 32 suivis de 12 zéros. Le paquet 33 est transmis en un seul segment 331' de fin de message (MSEO = 11) contenant ses 11 bits suivis de 5 zéros.

De manière générale, lorsque le premier paquet d'un message ayant plusieurs paquets a une taille inférieure ou égale à la taille n du bus MDO, ce premier paquet doit, selon le protocole précédent, être transmis en deux segments. La transmission du deuxième segment, qui ne contient aucune donnée, monopolise inutilement les bornes de test et réduit la bande passante du bus MDO.

La présente invention vise un procédé de transmission de messages en segments dans lequel un segment contenant à la fois le début d'un message et la fin d'un premier, et éventuellement unique, paquet du message peut être suivi immédiatement d'un segment contenant des données, par exemple le début d'un deuxième paquet du message ou le début d'un nouveau message.

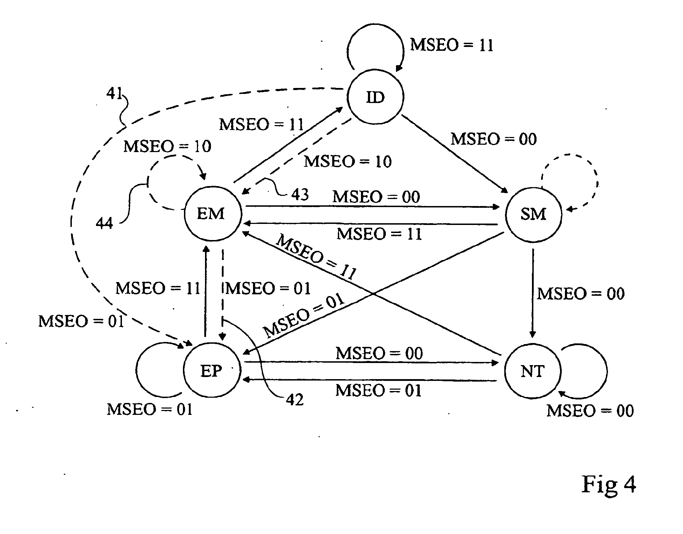

La figure 4 illustre un protocole de transmission de messages en segments selon la présente invention. La figure 4 reprend les références utilisées pour identifier les différents segments en figure 2. La figure 4 présente par rapport à la figure 2 les différences qui vont maintenant être décrites en relation avec les flèches dessinées en pointillés.

Selon la présente invention, un segment est classé comme étant de type EP non seulement s'il contient uniquement une fin de paquet, mais aussi s'il contient à la fois le début d'un message de plusieurs paquets et la fin du premier paquet du message. Ce dernier cas se présente si le premier paquet d'un message est plus court qu'un segment. Un tel segment EP de début de message et de fin de paquet peut suivre un segment vide ID lorsqu'un tel début de message est transmis après une période d'inactivité (flèche en pointillés gras 41) ou un segment EM lorsqu'un tel début de message est transmis après la fin d'un message précédent (flèche en pointillés gras 42).

Selon la présente invention, un segment est classé comme étant de type EM non seulement s'il contient uniquement une fin de message, mais aussi s'il contient à la fois le début et la fin d'un message. Ce dernier cas se présente si un message est plus court qu'un segment. Un tel segment EM de début et de fin de message peut suivre un segment ID lorsqu'un message court est transmis après une période d'inactivité (flèche en pointillés gras 43) ou un segment EM lorsqu'un message court est transmis immédiatement après un message précédent (flèche en pointillés gras 44).

La possibilité de classer un segment comme étant de type EM s'il contient à la fois le début et la fin d'un message remplace la possibilité, prévue par le protocole de la figure 2, de classer un tel segment comme étant de type SM. Ainsi, selon la présente invention (comme cela est indiqué par la flèche en pointillés légers), un segment SM ne peut plus suivre un segment SM (et indiquer par là que le premier segment SM contient un message plus court qu'un segment).

En figure 4, un segment EP est identifié par une valeur 01 du code MSEO quel que soit le segment précédent. Un segment EM est identifié soit par une valeur 11 du code MSEO si le segment précédent était un segment SM, NT ou EP, soit par une valeur 10 du code MSEO si le segment précédent était un segment EM ou ID. Les segments SM, NT et ID sont identifiés de la même façon que cela a été décrit précédemment.

La présente invention peut être mise en oeuvre dans un dispositif tel que représenté en figure 1 par l'homme du métier ayant pris connaissance de la section 8 de la version de 1999 de la norme IEEE-ISTO-5001. Pour cela, le circuit de surveillance 18 et l'outil d'analyse 24 seront programmés conformément au protocole de la figure 4.

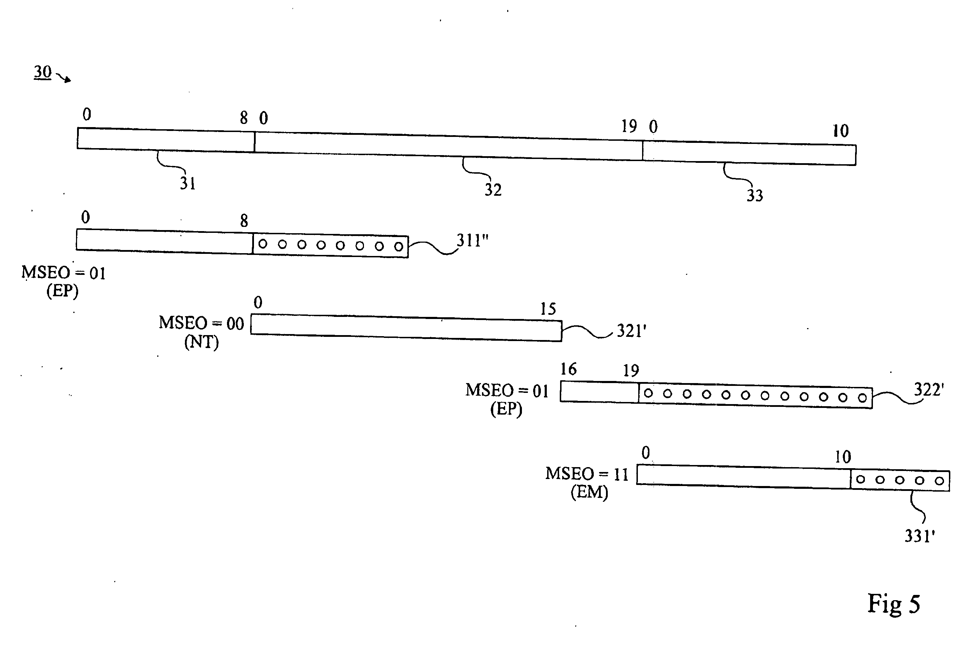

La figure 5 illustre la transmission du même message 30 que celui illustré en figure 3B par le bus MDO de n = 16 bits selon le protocole de la figure 4. Un seul segment 311" de type EP contient les 9 bits du premier paquet 31 suivis de 7 zéros. Ce segment 311" est suivi des mêmes segments 321', 322' et 331' que ceux décrits en relation avec la figure 3B. Avec le segment 311" est transmis un code MSEO ayant la valeur 01, et avec les segments 321', 322' et 331' sont transmis comme précédemment des codes MSEO ayant les valeurs 00, 01 et 11.

La présente invention permet dans l'exemple illustré en figure 5 de transmettre en quatre segments un message qui, dans de mêmes conditions, devait être transmis en cinq segments selon le protocole de la figure 2.

Dans le cas de messages comportant deux paquets ayant chacun une taille inférieure ou égale à un segment, la présente invention permet de n'envoyer que deux segments au lieu de trois.

La présente invention permet en outre notamment de transmettre en deux segments seulement (un segment EM et un segment EP) la succession d'un message de longueur inférieure à un segment et d'un premier paquet de longueur inférieure à un segment d'un message suivant. Une telle succession aurait été transmise en quatre segments (un segment SM suivi de segments EM, SM et EP) selon le protocole de la figure 2.

Bien entendu, la présente invention est susceptible de diverses variantes et modifications qui apparaîtront à l'homme du métier. En particulier, la présente invention a été décrite en relation avec une transmission de messages depuis le circuit de surveillance vers l'outil d'analyse, mais elle s'applique de même à une transmission de messages en sens inverse.

En outre la présente invention a été décrite en relation avec des valeurs particulières du code MSEO, mais ces valeurs pourront être modifiées ou inversées.

## Revendications

1. Procédé de transmission, entre un circuit de surveillance intégré à un microprocesseur et un outil d'analyse, de messages numériques comprenant chacun au moins un paquet de données, comportant les étapes suivantes :
a/ diviser chaque paquet de données en segments successifs de même taille prédéterminée, chaque segment étant classé selon l'un ou l'autre des cinq types de segment suivants :
- segment contenant un début de message (SM);
- segment contenant des données intermédiaires (NT);
- segment contenant une fin de paquet (EP) ;
- segment contenant une fin de message (EM) ; ou
- segment vide (ID) ;
b/ envoyer en même temps que chaque segment un signal d'identification (MSEO) caractérisant la différence de type entre le segment considéré et le segment précédent ; et
c/ reconstituer les paquets de chaque message en mettant bout à bout les segments contenant des données d'un même paquet ;
**caractérisé en ce qu'**un segment contenant à la fois le début et la fin d'un message est classé comme étant un segment contenant une fin de message (EM), et un segment contenant à la fois le début d'un message et la fin d'un premier paquet du message est classé comme étant un segment contenant une fin de paquet (EP).

2. Procédé selon la revendication 1, dans lequel :
un segment contenant un début de message (SM) ou un segment vide (ID) peut être transmis après un segment contenant une fin de message (EM) ou un segment vide (ID) ;
un segment contenant des données intermédiaires (NT) peut être transmis après un segment contenant un début de message (SM) ou des données intermédiaires (NT) ou une fin de paquet (EP) ; et
un segment contenant une fin de paquet (EP) ou une fin de message (EM) peut être transmis après un segment de type quelconque.

3. Procédé selon la revendication 2, dans lequel le signal d'identification (MSEO) a :
une première valeur (00) si le segment transmis contient un début de message (SM) ou des données intermédiaires (NT) ;
une deuxième valeur (01) si le segment transmis contient une fin de paquet (EP) ;
une troisième valeur (10) si le segment transmis contient une fin de message (EM) et si le segment précédent contenait une fin de message (EM) ou était un segment vide (ID) ; et
une quatrième valeur (11) si le segment transmis est vide (ID), ou si le segment transmis contient une fin de message (EM) et si le segment précédent contenait un début de message (SM), des données intermédiaires (NT) ou une fin de paquet (EP).

4. Dispositif de transmission, entre un circuit de surveillance intégré à un microprocesseur et un outil d'analyse, de messages numériques dont chacun comprend au moins un paquet de données, comportant :
un moyen (18) pour diviser chaque paquet de données en segments successifs de même taille prédéterminée, chaque segment étant classé selon l'un ou l'autre des cinq types de segment suivants :
- segment contenant un début de message (SM) ;
- segment contenant des données intermédiaires (NT) ;
- segment contenant une fin de paquet (EP) ;
- segment contenant une fin de message (EM) ; ou
- segment vide (ID) ;
un moyen (18) pour envoyer en même temps que chaque segment un signal d'identification caractérisant la différence de type entre le segment considéré et le segment précédent ; et
un moyen (24) pour reconstituer les paquets de chaque message en mettant bout à bout les segments contenant des données d'un même paquet ;
**caractérisé en ce** le moyen (18) pour diviser chaque paquet de données classe un segment contenant à la fois le début et la fin d'un message comme étant un segment contenant une fin de message (EM), et classe un segment contenant à la fois le début d'un message et la fin d'un premier paquet du message comme étant un segment contenant une fin de paquet (EP).

## Claims

1. A method for transmitting, between a monitoring circuit integrated with a microprocessor and an analysis tool, digital messages each comprising at least one data packet, comprising the steps of:
a/ dividing each data packet into successive segments of same predetermined size, each segment being classified according to one or the other of the five following types of segment:
- segment containing a message start (SM);
- segment containing intermediary data (NT);
- segment containing a packet end (EP);
- segment containing a message end (EM); or
- empty segment (ID);
b/ sending at the same time as each segment an identification signal (MSEO) characterizing the type difference between the considered segment and the previous segment; and
c/ reconstituting the packets of each message by arranging end to end the segments containing data of a same packet;
**characterized in that** a segment containing both the start and the end of a message is classified as being a segment containing a message end (EM), and a segment containing both the start of a message and the end of a first packet of the message is classified as being a segment containing a packet end (EP).

2. The method of claim 1, in which:
a segment containing a message start (SM) or an empty segment (ID) may be transmitted after a segment containing a message end (EM) or an empty segment (ID);
a segment containing intermediary data (NT) may be transmitted after a segment containing a message start (SM) or intermediary data (NT) or a packet end (EP); and
a segment containing a packet end (EP) or a message end (EM) may be transmitted after a segment of any type.

3. The method of claim 2, in which the identification signal (MSEO) has:
a first value (00) if the transmitted segment contains a message start (SM) or intermediary data (NT);
a second value (01) is the transmitted segment contains a packet end (EP);
a third value (10) if the transmitted segment contains a message end (EM) and if the previous segment contained a message end (EM) or was an empty segment (ID); and
a fourth value (11) if the transmitted segment is empty (ID), or if the transmitted segment contains a message end (EM) and if the previous message contained a message start (SM), intermediary data (NT), or a packet end (EP).

4. A device for transmitting, between a monitoring circuit integrated with a microprocessor and an analysis tool, digital messages, each of which comprises at least one data packet, comprising:
a means (18) for dividing each data packet into successive segments of same predetermined size, each segment being classified according to one or the other of the five following segment types:
- segment containing a message start (SM);
- segment containing intermediary data (NT);
- segment containing a packet end (EP);
- segment containing a message end (EM); or
- empty segment (ID);
means (18) for sending at the same time as each segment an identification signal characterizing the type difference between the considered segment and the previous segment; and
means (24) for reconstituting the packets of each message by arranging end to end the segments containing data of a same packet;
**characterized in that** the means (18) for dividing each data packet classifies a segment containing both the start and the end of a message as being a segment containing a message end (EM), and classifies a segment containing both the start of a message and the end of a first packet of the message as being a segment containing a packet end (EP).

## Patentansprüche

1. Verfahren zur Übertragung digitaler Nachrichten, die jeweils wenigstens ein Paket von Daten enthalten, zwischen einer in einem Mikroprozessor integrierten Überwachungsschaltung und einem Analyse-Werkzeug wobei das Verfahren die folgenden Schritte bzw. Stufen ausweist:
a/ Unterteilen jedes Datenpakets in aufeinanderfolgende Segmente volbestimmler gleicher Größe, wobei jeweils jedes Segment gemäß dem einen oder anderen der folgenden fünf Segmenttypen klassifiziert wird:
- als ein Segment, das einen Nachrichtenanfang enthält (SM);
- als ein Zwischendaten (NI) enthaltendes Segment;
- als ein ein Paketende (EP) enthaltendes Segment;
- als ein ein Nachrichtende (EM) enthaltendes Segment
- als ein leeres Segment (ID) ;
b/ zu gleicher Zeit wie jedes Segment wird jeweils ein Identifizierungs-bzw. Kennzeiclulungssignal (MSEO) ausgesandt, welches den Typenunterschied zwischen dem jeweils betrachteten Segment und dem vorhergehenden Segment kennzeichnet;
c/ Rekonsutuieren bzw, Wiederherstellen der Pakete jeder Nachricht, indem Daten ein und desselben Pakets enthaltende Segmente endweise hintereinander angeordnet werden;
**dadurch gekennzeichnet, dass** ein zugleich den Anfang und das Ende einer Nachricht enthaltendes Segment als ein ein Nachrichtende enthaltendes Segment (EM) klassifiziert und ein Segment, das zugleich den Anfang einer Nachricht und das Ende eines ersten Pakets der Nachricht als ein ein Paketende (EP) enthaltendes Segment klassifiziert wird.

2. Verfahren nach Anspruch 1, in welchem:
ein Segment, das einen Nachrkhtanfang (SM) enthält oder ein leeres Segment (ID) nach einem Segment übertragen werden kann, das ein Nachrichtende (EM) enthält oder ein leeres Segment (ID);
ein Zwischendaten (NT) enthaltendes Segment nach einem Segment uberttagen werden kann, das einen Nachrichtanfang (SM) oder Zwischendaten (NT) oder ein Paketende (EP) enthält; und in welchem
ein Segment, das ein Paketende (EP) oder ein Nachrichtende (EM) enthält, nach einem Segment irgendeines lyps übertragen weiden kann.

3. Verfahren nach Anspruch 2, in welchem das Identifizierugs-Signal (MSEO):
einen ersten Wert (00) besitzt, wenn das übeitiagene Segment einen Nachrichtanfang (SM) oder Zwischendaten (NT) enthält,
einen zweiten Weit (01) besitzt, wenn das übertragene Segment ein Paketende (EP) enthäLt;
einen dritten Wert (10) besitzt, wenn das überhagene Segment ein Nachrichtende (F.M) enthält und wenn das vorhergehende Segment ein Nachlichtcnde (EM) enthielt oder ein leeres Segment (ID) war;
einen vierten Weit (11) besitzt, wenn das übertragene Segment leer ist (ID), oder wenn das übertragene Segment ein Nachrichtcnende (EM) enthält und wenn das vorhergehende Segment einen Nachrichtanfang (SM), Zwischendaten (NT) oder ein Paketende (EP) enthielt

4. Vorrichtung aur Übertragung digitaler Nachrichten, deren jede jeweils wenigstens ein Paket von Daten enthält, zwischen einer in einem Mikroprozessor integrierten Überwachungsschaltung und einem Analyse-Werkzeug, wobei die Vorrichtung aufweist:
ein Mittel (18) zum Unterteilen jedes Datenpakets in aufeinanderfolgende Segmente vorbestimmter gleicher Größe, wobei jeweils jedes Segment gemäß dem einen oder anderen der folgenden fünf Segmenttypen klassifiziert wird:
- als ein Segment, das einen Nachrichtenanfang enthält (SM);
- als ein Zwischendaten (NT) Enthaltendes Segment;
- als ein ein Paketende (EP) enthaltendes Segment ;
- als ein ein Nachrichtende (EM) enthaltendes Segment ;
- als ein leeres Segment (ID) ;
ein Mittel (18), um zui gleichen Zeit wie jedes Segment jeweils ein Identifizierungs- bzw. Kennzeichnungssignal auszusenden, welches den Typenunterschied zwischen dem jeweils betrachteten Segment und dem vorhergehenden Segment kennzeichnet;
ein Mittel (24) zum Rekonstituieren bzw. Wiederherstetlen der Pakete jeder Nachricht, indem Daten ein und desselben Pakets enthaltende Segmente endweise hintereinander angeordnet werden;
**dadurch gekennzeichnet, dass** das Mittel (18) zum Unterteilen jeweils jedes Datenpakets ein Segment, das zugleich den Anfang und das Ende einer Nachricht enthält, als ein ein Nachrichtende (EM) enthaltendes Segment klassifiziert und das ein Segment, das zugleich den Anfang einer Nachricht und das Ende eines ersten Pakets der Nachricht als ein ein Paketende (EP) enthaltendes Segment klassifiziert
